(19) Europäisches Patentamt
European Patent Office
Office européen des brevets

(11) **EP 3 002 891 A1**

(12) **EUROPEAN PATENT APPLICATION**
published in accordance with Art. 153(4) EPC

(43) Date of publication:
06.04.2016 Bulletin 2016/14

(51) Int Cl.:
*H04B 10/07* (2013.01)   *H04Q 11/00* (2006.01)

(21) Application number: 13888368.1

(22) Date of filing: 29.06.2013

(86) International application number:
PCT/CN2013/078502

(87) International publication number:
WO 2014/205840 (31.12.2014 Gazette 2014/53)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• CHENG, Ning
  Shenzhen
  Guangdong 518129 (CN)

• ZHONG, Degang
  Shenzhen
  Guangdong 518129 (CN)
• LIAO, Zhenxing
  Shenzhen
  Guangdong 518129 (CN)

(74) Representative: Pfenning, Meinig & Partner mbB
Patent- und Rechtsanwälte
Joachimsthaler Straße 12
10719 Berlin (DE)

(54) **OPTICAL SIGNAL MONITORING METHOD, SIGNAL MONITORING DEVICE AND OPTICAL NETWORK SYSTEM**

(57)   Embodiments of the present invention disclose an optical signal monitoring and control method, including: receiving a first optical signal, performing optical-to-electrical conversion on the first optical signal, and outputting a converted first electrical signal; monitoring the first electrical signal, and acquiring a monitored power of the first electrical signal; adjusting the monitored power of the first electrical signal according to a target monitored power of the first electrical signal, and outputting a second electrical signal, so that a monitored power of the second electrical signal is the target monitored power; and performing optical-to-electrical conversion on the second electrical signal according to a correspondence between the target monitored power of the first electrical signal and a target extinction ratio of the first optical signal, and outputting a converted second optical signal, where the second optical signal is an optical signal that has a target extinction ratio. Correspondingly, the embodiments of the present invention further disclose a related apparatus and system. The embodiments of the present invention can implement precise control on an extinction ratio of an optical signal.

FIG. 1

**Description**

**TECHNICAL FIELD**

The present invention relates to the light field, and in particular, to an optical signal monitoring and control method, a signal monitoring apparatus and an optical network system.

**BACKGROUND**

An extinction ratio of an optical signal on an optical network is a very important parameter. An excessively small extinction ratio causes a signal to noise ratio to become poor. As the signal to noise ratio becomes poor, a high-quality channel for transmitting an optical signal is required to make up for this defect. Consequently, the excessively small extinction ratio leads to an increase in costs of the channel for transmitting an optical signal. Moreover, an excessively large extinction ratio causes an increase in a chirp. As the chirp increases, a channel, having high dispersion performance, for transmitting an optical signal is required to make up for this defect. Consequently, the excessively large extinction ratio causes an increase in dispersion costs of the channel for transmitting an optical signal. Therefore, an extinction ratio of an optical signal needs to be precisely controlled.

**SUMMARY**

Embodiments of the present invention provide an optical signal monitoring and control method, a signal monitoring apparatus and an optical network system, which can implement precise control on an extinction ratio of an optical signal.

According to a first aspect, an embodiment of the present invention provides an optical signal monitoring method, including:

receiving a first optical signal, performing optical-to-electrical conversion on the first optical signal, and outputting a converted first electrical signal;

monitoring the first electrical signal, and acquiring a monitored power of the first electrical signal;

adjusting the monitored power of the first electrical signal according to a target monitored power of the first electrical signal, and outputting a second electrical signal, so that a monitored power of the second electrical signal is the target monitored power; and

performing optical-to-electrical conversion on the second electrical signal according to a correspondence between the target monitored power of the first electrical signal and a target extinction ratio of the first optical signal, and outputting a converted second optical signal, where the second optical signal is an optical signal that has a target extinction ratio.

In a first possible implementation manner of the first aspect, before the acquiring a monitored power of the first electrical signal, the method includes:

amplifying the first electrical signal, and performing power monitoring on the amplified first electrical signal.

With reference to any one of the foregoing implementation manners of the first aspect, in a second possible implementation manner of the first aspect, the acquiring a monitored power of the first electrical signal includes:

acquiring an average power of the first electrical signal and an alternating current power of the first electrical signal.

With reference to the second possible implementation manner of the first aspect, in a third possible implementation manner of the first aspect, the target monitored power of the first electrical signal includes a target average power of the first electrical signal and a target alternating current power of the first electrical signal.

With reference to the third possible implementation manner of the first aspect, in a fourth possible implementation manner of the first aspect, the adjusting the monitored power of the first electrical signal according to a target monitored power of the first electrical signal, and outputting a second electrical signal includes:

adjusting a bias current of the first electrical signal according to the target average power of the first electrical signal and the average power of the first electrical signal, so that the adjusted bias current of the first electrical signal is a target bias current; adjusting a modulation current of the first electrical signal according to the target alternating current power of the first electrical signal and the alternating current power of the first electrical signal, so that the adjusted modulation current of the first electrical signal is a target modulation current; and
outputting the second electrical signal according to the target bias current and the target modulation current of the first electrical signal, where a bias current of the second signal is the target bias current, and a modulation current of the second signal is the target modulation current.

With reference to any one of the foregoing implementation manners of the first aspect, in a fifth possible implementation manner of the first aspect, the correspondence between the target monitored power of the first electrical signal and the target extinction ratio of the first optical signal is associated with a slope efficiency of the first optical signal.

According to a second aspect, an embodiment of the present invention provides a signal monitoring apparatus, including: a photodiode, a monitoring unit, an adjusting unit, and an output unit, where:

the photodiode is configured to receive a first optical signal, perform optical-to-electrical conversion on the first optical signal, and output a converted first electrical signal;
the monitoring unit is configured to monitor the first electrical signal, and acquire a monitored power of the first electrical signal;
the adjusting unit is configured to adjust the monitored power of the first electrical signal according to a target monitored power of the first electrical signal, and output a second electrical signal, so that a monitored power of the second electrical signal is the target monitored power; and
the output unit is configured to perform optical-to-electrical conversion on the second electrical signal according to a correspondence between the target monitored power of the first electrical signal and a target extinction ratio of the first optical signal, and output a converted second optical signal, where the second optical signal is an optical signal that has a target extinction ratio.

In a first possible implementation manner of the second aspect, the apparatus further includes an amplifier, where:

an input end of the amplifier is connected to an output end of the photodiode, an output end of the amplifier is connected to an input end of the monitoring unit, and the amplifier is configured to amplify the electrical signal, and perform power monitoring on the amplified electrical signal.

With reference to the first possible implementation manner of the second aspect, in a second possible implementation manner of the second aspect, the monitoring unit includes an average power monitoring unit and an alternating current power monitoring unit, where:

an input end of the average power monitoring unit is connected to the output end of the amplifier, and the average power monitoring unit is configured to acquire an average power of the first electrical signal; and
an input end of the alternating current power monitoring unit is connected to the output end of the amplifier, and the alternating current power monitoring unit is configured to acquire an alternating current power of the first electrical signal.

With reference to the second possible implementation manner of the second aspect, in a third possible implementation manner of the second aspect, the target monitored power of the first electrical signal includes a target average power of the first electrical signal and a target alternating current power of the first electrical signal.

With reference to the third possible implementation manner of the second aspect, in a fourth possible implementation manner of the second aspect, the adjusting unit includes a bias current adjusting unit and a modulation current adjusting unit, where:

an input end of the bias current adjusting unit is connected to an output end of the average power monitoring unit, and the bias current adjusting unit is configured to adjust a bias current of the first electrical signal according to the target average power of the first electrical signal and the average power of the first electrical signal, so that the adjusted bias current of the first electrical signal is a target bias current;
an input end of the modulation current adjusting unit is connected to an output end of the alternating current power monitoring unit, and the modulation current adjusting unit is configured to adjust a modulation current of the first electrical signal according to the target alternating current power of the first electrical signal and the alternating current power of the first electrical signal, so that the adjusted modulation current of the first electrical signal is a target modulation current; and
an output subunit is configured to output the second electrical signal according to the target bias current and the target modulation current of the first electrical signal, where a bias current of the second signal is the target bias current, and a modulation current of the second signal is the target modulation current.

With reference to the fourth possible implementation manner of the second aspect, in a fifth possible implementation manner of the second aspect, the output subunit includes a bias current source and a modulation current source, where:

the bias current source is configured to output the target bias current; and
the modulation current source is configured to output the target modulation current.

With reference to the fifth possible implementation manner of the second aspect, in a sixth possible implementation manner of the second aspect, the bias current adjusting unit includes a first comparator, a first input end of the first comparator is connected to the output end of the average power monitoring unit, a second input end of the first comparator is connected to a first reference value used for denoting the target average power of the first electrical signal, an output end of the first comparator is connected to the bias current source, and the first comparator is configured to adjust, according to the target average power of the first electrical signal and the average power of the first electrical signal, a current that is output by the bias current source, so that the current that is output by the bias current source is the target bias current.

With reference to the fifth possible implementation manner or the sixth possible implementation manner of the second aspect, in a seventh possible implementation manner of the second aspect, the modulation current adjusting unit includes a second comparator, a first input end of the second comparator is connected to the output end of the alternating current power monitoring unit, a second input end of the second comparator is connected to a second reference value used for denoting the target alternating current power of the first electrical signal, an output end of the second comparator is connected to the modulation current source, and the second comparator is configured to adjust, according to the target average power of the first electrical signal and the average power of the first electrical signal, a current that is output by the modulation current source, so that the current that is output by the modulation current source is the target modulation current.

According to a third aspect, an embodiment of the present invention provides an optical network system, where the optical network system includes an optical line terminal and an optical network unit, where the optical line terminal is connected to the optical network unit by using an optical distribution network, and the optical line terminal includes the signal monitoring apparatus in any one of the foregoing implementation manners of the second aspect, and/or the optical network unit includes the signal monitoring apparatus in any one of the foregoing implementation manners of the second aspect.

In the foregoing technical solutions, a first optical signal is received, optical-to-electrical conversion is performed on the first optical signal, and a converted first electrical signal is output; the first electrical signal is monitored, and a monitored power of the first electrical signal is acquired; the monitored power of the first electrical signal is adjusted according to a target monitored power of the first electrical signal, and a second electrical signal is output, so that a monitored power of the second electrical signal is the target monitored power; and optical-to-electrical conversion is performed on the second electrical signal according to a correspondence between the target monitored power of the first electrical signal and a target extinction ratio of the first optical signal, and a converted second optical signal is output, where the second optical signal is an optical signal that has a target extinction ratio. In this way, precise control on an extinction ratio of an optical signal can be implemented on the basis of precise control on a monitored power.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of an optical signal monitoring and control method according to an embodiment of the present invention;
FIG. 2 is a schematic flowchart of another optical signal monitoring and control method according to an embodiment of the present invention;
FIG. 3 to FIG. 5 are schematic diagrams of optional correspondences according to embodiments of the present invention;
FIG. 6 is a schematic structural diagram of a signal monitoring apparatus according to an embodiment of the present invention;

FIG. 7 is a schematic structural diagram of another signal monitoring apparatus according to an embodiment of the present invention;

FIG. 8 is a schematic structural diagram of another signal monitoring apparatus according to an embodiment of the present invention;

FIG. 9 is a schematic structural diagram of another signal monitoring apparatus according to an embodiment of the present invention;

FIG. 10 is a schematic structural diagram of another signal monitoring apparatus according to an embodiment of the present invention;

FIG. 11 is a schematic structural diagram of another signal monitoring apparatus according to an embodiment of the present invention; and

FIG. 12 is a schematic structural diagram of an optical network system according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

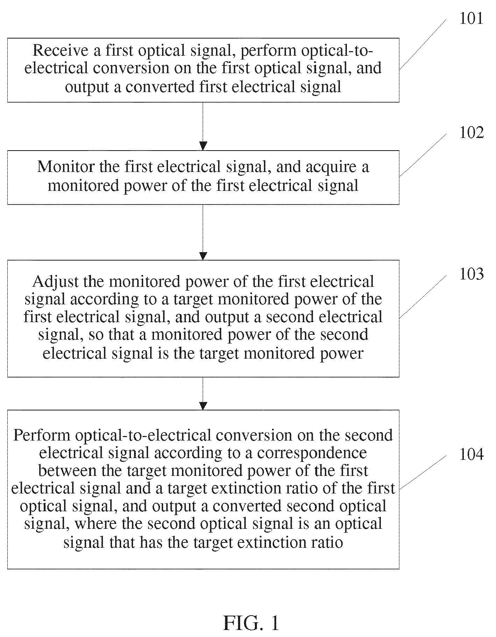

FIG. 1 is a schematic flowchart of an optical signal monitoring and control method according to an embodiment of the present invention. As shown in FIG. 1, the method includes:

101: Receive a first optical signal, perform optical-to-electrical conversion on the first optical signal, and output a converted first electrical signal.

Specifically, a photodiode may perform optical-to-electrical conversion on the first optical signal, and output the first electrical signal, for example, a current signal.

102: Monitor the first electrical signal, and acquire a monitored power of the first electrical signal.

Specifically, an average power and an alternating current power of the first electrical signal may be acquired.

103: Adjust the monitored power of the first electrical signal according to a target monitored power of the first electrical signal, and output a second electrical signal, so that a monitored power of the second electrical signal is the target monitored power.

That is, the first electrical signal is adjusted to obtain the second electrical signal. Specifically, a current or a voltage of the first electrical signal may be adjusted.

104: Perform optical-to-electrical conversion on the second electrical signal according to a correspondence between the target monitored power of the first electrical signal and a target extinction ratio of the first optical signal, and output a converted second optical signal, where the second optical signal is an optical signal that has a target extinction ratio.

The correspondence exists between the target monitored power of the first electrical signal and the target extinction ratio of the first optical signal, and therefore, when the monitored power of the second electrical signal is the target monitored power, an extinction ratio of the second optical signal obtained after the conversion from the second electrical signal is the target extinction ratio. That is, according to the correspondence between the target monitored power of the first electrical signal and the target extinction ratio of the first optical signal, the extinction ratio of the second optical signal can be determined by using the monitored power of the second electrical signal, and conversely, the monitored power of a monitored signal of the second electrical signal can be determined by using the extinction ratio of the second optical signal.

The extinction ratio may be specifically a ratio of a power generated by the first electrical signal when a pulse level for controlling emitting of an optical signal is a high level (for example, "1") to a power generated by the first electrical signal when the pulse level is a low level (for example, "0").

The method may be applied to any device that can send an optical signal, for example, a laser.

In the foregoing technical solution, a first optical signal is received, optical-to-electrical conversion is performed on the first optical signal, and a converted first electrical signal is output; the first electrical signal is monitored, and a monitored power of the first electrical signal is acquired; the monitored power of the first electrical signal is adjusted according to a target monitored power of the first electrical signal, and a second electrical signal is output, so that a monitored power of the second electrical signal is the target monitored power; and optical-to-electrical conversion is performed on the second electrical signal according to a correspondence between the target monitored power of the first electrical signal and a target extinction ratio of the first optical signal, and a converted second optical signal is output, where the second optical signal is an optical signal that has a target extinction ratio. In this way, precise control on an extinction ratio of an optical signal can be implemented on the basis of precise control on a monitored power.

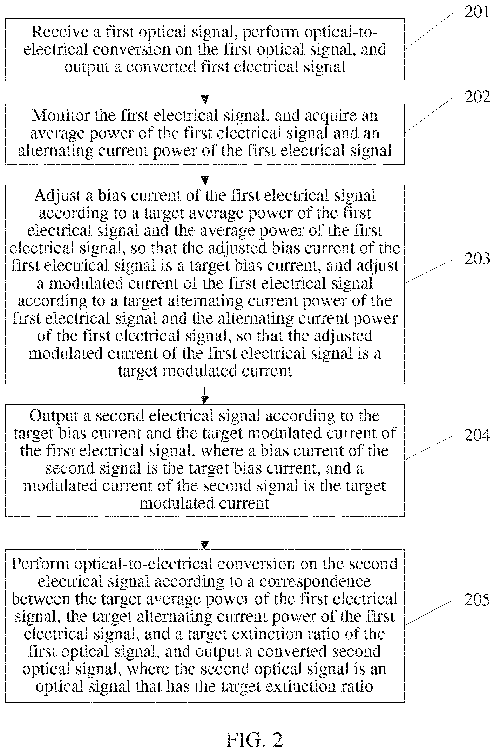

FIG. 2 is a schematic flowchart of another optical signal monitoring and control method according to an embodiment of the present invention. As shown in FIG. 2, the method includes:

201: Receive a first optical signal, perform optical-to-electrical conversion on the first optical signal, and output a converted first electrical signal.

Specifically, the electrical signal that is output in step 201 may be amplified, that is, before step 202, the method may further include:

amplifying the first electrical signal, and performing power monitoring on the amplified first electrical signal. That is, step 202 may be performing power monitoring on the amplified first electrical signal.

Specifically, a photodiode may perform optical-to-electrical conversion on the first optical signal, and an amplification circuit may amplify the first optical signal. For example, optical-to-electrical conversion is performed on the first optical signal by using a monitor photodiode (Monitor Photodiode Detector, MPD), and the first optical signal is amplified by using a transimpedance amplifier (Transimpedance Amplifier, TIA), where the MPD may be specifically a low-rate monitor photodiode, and the first electrical signal after being amplified by the TIA may be specifically a voltage signal.

202: Monitor the first electrical signal, and acquire an average power of the first electrical signal and an alternating current power of the first electrical signal.

The acquiring an alternating current power of the first electrical signal may specifically include:

performing filtering on the amplified first signal, and acquiring an alternating current power of the first electrical signal that undergoes filtering. That is, filtering is performed on the first electrical signal amplified in step 201, where the first electrical signal that undergoes filtering is an alternating current signal. In this way, a calculated power of the first electrical signal that undergoes filtering is an alternating current power, that is, the alternating current power of the amplified first electrical signal is obtained. The filtration may be specifically performing filtering on the monitored signal by using a band-pass filter (Band Pass Filter, BPF), a high-pass filter, or a coupling capacitor, that is, blocking a direct current power of the first electrical signal and obtaining the alternating current power of the monitored signal.

203: Adjust a bias current of the first electrical signal according to a target average power of the first electrical signal and the average power of the first electrical signal, so that the adjusted bias current of the first electrical signal is a target bias current; and adjust a modulation current of the first electrical signal according to a target alternating current power of the first electrical signal and the alternating current power of the first electrical signal, so that the adjusted modulation current of the first electrical signal is a target modulation current.

204: Output a second electrical signal according to the target bias current and the target modulation current of the first electrical signal, where a bias current of the second signal is the target bias current, and a modulation current of the second signal is the target modulation current.

Specifically, a correspondence may exist between the target average power and the target bias current, and in this way, the average power of the first electrical signal may be adjusted to the target average power according to the target average power of the first electrical signal. From the one-to-one correspondence between the target average power and the target bias current of the first electrical signal, it can be known that, when the average power of the first electrical signal is adjusted to the target average power, the bias current that is output by the first electrical signal is the target bias current. A correspondence exists between the target alternating current power and the target modulation current, and in this way, the alternating current power of the first electrical signal may be adjusted to the target alternating current power according to the target alternating current power of the first electrical signal. From the one-to-one correspondence between the target alternating current power and the target modulation current of the first electrical signal, it can be known that, when the alternating current power of the first electrical signal is adjusted to the target alternating current power, the modulation current that is output by the first electrical signal is the target modulation current.

205: Perform optical-to-electrical conversion on the second electrical signal according to a correspondence between the target average power of the first electrical signal and the target alternating current power of the first electrical signal and a target extinction ratio of the first optical signal, and output a converted second optical signal, where the second optical signal is an optical signal that has a target extinction ratio.

That is, the target monitored power of the first electrical signal in the foregoing embodiment may specifically include the target average power of the first electrical signal and the target alternating current power of the first electrical signal. The correspondence between the target monitored power of the first electrical signal and the target extinction ratio of the first optical signal may specifically include the correspondence between the target average power of the first electrical signal and the target alternating current power of the first electrical signal and the target extinction ratio of the first optical signal.

The correspondence between the target average power of the first electrical signal and the target alternating current power of the first electrical signal and the target extinction ratio of the first optical signal may be specifically shown in the following expression:

$$P_{\text{mod}} = K \frac{r_e}{r_e + 1} ,$$

where $P_{\text{mod}}$ is the target average power of the first electrical signal, $r_e$ is the target extinction ratio of the first optical signal, and K is a constant that varies according to the target average power of the first electrical signal, that is, when the target average power of the first electrical signal remains the same, K is a constant, where K may be specifically shown in the following expression:

$$K = 2AP_{avg} = 2P_{avg} \int_{-\infty}^{\infty} \frac{R_t R}{4T_b} |H(f)|^2 |G(f)|^2 ,$$

where $P_{avg}$ is the target average power of the first electrical signal, $T_b$ is an element cycle, $f$ is a frequency of the first electrical signal, $H(f)$ is a filter frequency of the BPF, $G(f)$ is a spectrum of the first electrical signal (that is, Fourier transformation of a pulse of the first electrical signal), R may be specifically a responsivity of the MPD that monitors the first electrical signal, and $R_t$ may be specifically a transimpedance of the TIA that monitors the first electrical signal.

For example, a power of the first optical signal is shown in the following expression:

$$P_{laser}(t) = \sum_{k=-\infty}^{\infty} a_k P_1 g(t) + P_0 ,$$

where $P_{laser}(t)$ is the power of the first optical signal, $a_k = \{0, 1\}$ represents binary data, $P_1$ is a power of a bit "1", $P_0$ is a power of a bit "0", and g(t) represents a pulse of the sent signal. Assuming that the responsivity of the MPD is R, the first electrical signal may be shown in the following:

$$I(t) = RP_{laser}(t) = R \sum_{k=-\infty}^{\infty} a_k P_1 g(t) + P_0 ,$$

where $I(t)$ is the first electrical signal, and R is the responsivity of the MPD.

Assuming that the transimpedance of the TIA is $R_t$, the first electrical signal after being amplified by the TIA may be shown in the following expression:

$$V(t) = R_t I(t) = R_t R \sum_{k=-\infty}^{\infty} a_k P_1 g(t) + P_0 ,$$

where $V(t)$ represents the amplified first electrical signal.

When the filtration is implemented by using the band-pass filter, because the MPD generally has a low-pass frequency response $H_{\text{MPD}}(f)$, assuming that the MPD has an ideal response, the frequency response of the MPD is merged into the band-pass filter, and $H(f) = H_{\text{MPD}}(f) \cdot H_{\text{TIA}}(f) \cdot H_{\text{BPF}}(f)$, where $H_{\text{BPF}}(f)$ is a frequency response of the band-pass filter, and $H_{\text{TIA}}(f)$ is a frequency response of the transimpedance amplifier.

Corresponding to random binary data such as binary data irrelevant to $a_k$, a power spectral density of the first electrical signal $V(t)$ may be shown in the following expression:

$$S_v(f) = \frac{R_t R P_1}{4T_b} |G(f)|^2 + \frac{R_t R P_1}{4T_b^2} \sum_{m=-\infty}^{\infty} \left| G\left(\frac{m}{T_b}\right) \right|^2 \delta\left(f - \frac{m}{T_b}\right) + R_t R P_0 \delta(f) ,$$

where $S_v(f)$ is the power spectral density of the first electrical signal $V(t)$, $f$ is the frequency of the first electrical signal, $T_b$ is the element cycle, $G(f)$ is the spectrum of the signal pulse, $m$ is an integer, and $\delta(f)$ is a unit pulse response function, for example, a Dirac (Dirac) function.

For the first electrical signal $V(t)$, a power spectral density after the filtering performed by the BPF may be shown in the following expressions:

$$S_{BPF}(f) = \left| H(f) \right|^2 S_v(f)$$

and

$$S_{BPF}(f) = \left| H(f) \right|^2 \left[ \frac{R_t R P_1}{4T_b} \left| G(f) \right|^2 + \frac{R_t R P_1}{4T_b{}^2} \sum_{m=-\infty}^{\infty} \left| G(\frac{m}{T_b}) \right|^2 \delta(f - \frac{m}{T_b}) + R_t R P_0 \delta(f) \right],$$

where $H(f)$ is the filter frequency of the BPF.

Specifically, a low cut-off frequency of the BPF may be set to be greater than 0, and a high cut-off frequency may be set to be less than a data rate; then the power spectral density obtained after the filtering performed by the BPF may be shown in the following expression:

$$S_{BPF}(f) = \frac{R_t R P_1}{4T_b} \left| G(f) \right|^2 \left| H(f) \right|^2 .$$

Then, the alternating current power of the first electrical signal may be obtained by using the power spectral density obtained after the filtering performed by the BPF, and may be shown in the following expression:

$$P_{\text{mod}} = \int_{-\infty}^{\infty} \frac{R_t R P_1}{4T_b} \left| H(f) \right|^2 \left| G(f) \right|^2 = A P_1 ,$$

where $P_{\text{mod}}$ is the alternating current power of the first electrical signal, and A may be shown in the following expression:

$$A = \int_{-\infty}^{\infty} \frac{R_t R}{4T_b} \left| H(f) \right|^2 \left| G(f) \right|^2 .$$

That is, corresponding to the given MPD, TIA and BPF, A may be obtained, that is, A may be a constant. Therefore, the alternating current power $P_{\text{mod}}$ of the amplified first electrical signal is in proportion to the power $P_1$ of "1", and the average power $P_{avg}$ of the first electrical signal, the power $P_1$ of "1", and the extinction ratio $r_e$ meet the following relationship:

$$P_1 = 2P_{avg} \frac{r_e}{r_e + 1} .$$

That is, it may be obtained that, the alternating current power $P_{\text{mod}}$ of the first electrical signal, the average power $P_{avg}$ of the first electrical signal, and the extinction ratio $r_e$ meet the following relationship:

$$P_{\text{mod}} = 2A P_{avg} \frac{r_e}{r_e + 1} = K \frac{r_e}{r_e + 1} .$$

That is, it may be obtained that, the correspondence between the target average power of the first electrical signal and the target alternating current power of the first electrical signal and the target extinction ratio of the first optical signal may be specifically shown in the following expression:

$$P_{\mathrm{mod}} = K \, \frac{r_e}{r_e + 1}$$

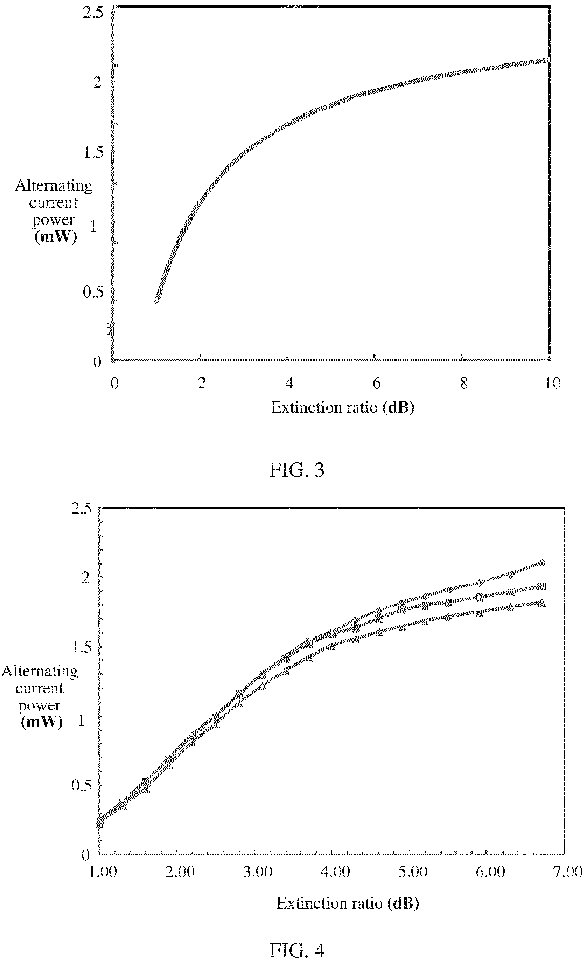

The correspondence between the target average power of the first electrical signal and the target alternating current power of the first electrical signal and the target extinction ratio of the first optical signal may be shown in FIG. 3. As shown in the figure, a one-to-one correspondence exists between the extinction ratio of the first electrical signal and the alternating current power of the first electrical signal. Therefore, the alternating current power may be used to monitor and control the extinction ratio. During normal work, the alternating current power may be continuously monitored and be compared with a first reference value. If a difference exists between a measured value and the first reference value, the modulation current is adjusted until the measured value is equal to the reference value. Specifically, the first reference value may be preset; in step 203, the alternating current power is adjusted and is compared with the first reference value, and then the modulation current is adjusted according to a comparison result. In addition, a second reference value may be further preset; in step 203, the average power is adjusted and is compared with the second reference value, and then the bias current is adjusted according to a comparison result.

For a given extinction ratio, if slope efficiencies of optical signal sending devices are different, coupling efficiencies between the optical signal sending devices and the MPD are different, duty cycles of modulated signals are different, and an IA gains are different, measured alternating current power varies to some extent. FIG. 4 shows test results of three different 10 Gbps directly modulated lasers (Direct Modulation LD, DML). To precisely control the extinction ratio, a relationship between the alternating current power and the extinction ratio needs to be calibrated for a specific DML transceiver. An extinction ratio of a monitored optical signal is calibrated before step 201, and a calibrated reference value (for example, the first reference value or the second reference value) is stored in a memory, so to be used during normal operation. Certainly, multiple reference values corresponding to multiple different target extinction ratios may be stored. The following provides description by using a specific calibration example. Certainly, a calibration manner is not limited in this embodiment.

For example, calibration of the extinction ratio and the average power $P_{avg}$ may be performed when the DML transceiver is powered on, a current $I_{laser}$ of an optical signal sent by a laser is swept from 0 to a specific value (a maximum working current of the DML). In addition, the average power $P_{avg}$ is measured and recorded, and is recorded as $P_{avg}(I_{laser})$ based on a relationship function between the measured $P_{avg}$ and $I_{laser}$. For a target extinction ratio $E_{Rtarget}$, a modulation current $I_{mod}$ and a bias current $I_B$ may be determined, and then, the average power $P_{avg}$ corresponding to the target extinction ratio $ER_{target}$ may be determined, where the average power $P_{avg}$ may be used as the first reference value for adjusting the average power of the monitored signal. For example, for a given bias current $I_B$ of the laser (a bias current of the DML is determined by the average optical power), an extinction ratio may be determined by using a given modulation current, and then, a correspondence between the modulation current and the extinction ratio may be obtained. The alternating current power and the modulation current of the monitored signal satisfy the correspondence; in this way, the alternating current power of the monitored signal can be adjusted by adjusting the modulation current, so as to adjust the extinction ratio of the optical signal. For example, if a modulation current is $I_{mod}$, a measured optical power $P_{1avg}(I_B + 0.5 \cdot I_{mod})$ of a corresponding bit "1" may be determined by using a relationship curve between $P_{avg}$ and $I_{laser}$. A measured optical power $P_{0avg}(I_B - 0.5 \cdot I_{mod})$ of a corresponding bit "0" may also be determined by using a similar method. Then the extinction ratio may be simply represented as $E_R = P_{1avg}(I_B + 0.5 \cdot I_{mod})/P_{0avg}(I_B - 0.5 \cdot I_{mod})$. Conversely, if a extinction ratio is given, the modulation current $I_{mod}$ may be determined by using the relationship curve between $P_{avg}$ and $I_{laser}$ or the slope efficiency. After $I_{mod}$ is determined, the laser can work in a normal mode. In this case, a corresponding extinction ratio value and a measured $P_{mod}$ are used as the second reference value $P_{mod,ref}$, and in step 203, the alternating current power of the monitored signal may be adjusted by using the second reference value $P_{mod,ref}$.

As an optional implementation manner, the correspondence between the target monitored power of the first electrical signal and the target extinction ratio of the first optical signal is associated with a slope efficiency of the first optical signal. That is, for different slope efficiencies, correspondences between the target monitored power of the first electrical signal and the target extinction ratio of the first optical signal are different. The slope efficiency may be specifically a value of an optical power that is converted from a unit current greater than a threshold, and specifically, may be a value of an optical power of the first optical signal that is converted from the bias current and/or a value of an optical power of the first optical signal that is converted from the modulation current. A specific correspondence exists between the optical power of the first optical signal and the monitored power of the first electrical signal. Specifically, reference may be made to the foregoing formulas. In this way, the slope efficiency may be used to monitor a relationship among the bias current, the modulation current, and the monitored power of the first electrical signal; a specific correspondence exists between the bias current and the modulation current and the extinction ratio of the first optical signal, and therefore, the correspondence between the target monitored power of the first electrical signal and the target extinction ratio of the first optical signal is associated with the slope efficiency of the first optical signal. That is, in this embodiment, the correspondence between the target monitored power of the first electrical signal and the target extinction ratio of the first optical signal may be calibrated according to the slope efficiency of the first electrical signal, and the calibration may be performed in the following example:

For example, the second reference value $P_{mod,ref}$ is the target alternating current power corresponding to the target extinction ratio, and then the second reference value $P_{mod,ref}$ may be adjusted according to the slope efficiency. The following provides description by using a specific adjustment example. Certainly, an adjustment manner in which the second reference value $P_{mod,ref}$ is adjusted is not limited in this embodiment. For example, in actual application, the slope efficiency of the DML may vary due to impact of a temperature variation or aging. When the slope efficiency of the DML varies, a relationship between $P_{mod}$ and $ER_{target}$ may not vary or may vary very slightly. To calibrate a variation of the slope efficiency during normal work, the second reference value $P_{mod,ref}$ for adjusting the target alternating current power of the first electrical signal needs to be calibrated during the normal work. This may be implemented by slightly adjusting the bias current. For example, if the bias current $I_B$ of the first electrical signal is increased to make $\Delta I_B = 5$ mA, an output power is also slightly increased, which does not affect a power budget and normal work of a receiver that is configured to receive an optical signal. When the bias current is set to $I_B$ and $I_B + \Delta I_B$, corresponding $P_{avg}(I_B)$ and $P_{avg}(I_B + \Delta I_B)$ may be measured. From these two points, a relationship between $P_{avg}$ and $I_B$ may be determined, and for a given target extinction ratio of the first electrical signal, the modulation current $I_{mod}$ of the first electrical signal may also be determined. Then the modulation current may be set to a new determined value, and a value of $P_{mod}$ is measured and is used as a new second reference value $P_{mod,ref}$. A linear relationship between $P_{avg}$ and $I_B$ may also be obtained through multipoint measurement. For example, the linear relationship between $P_{avg}$ and $I_B$ may also be determined by measuring powers $P_{avg}(I_B)$, $P_{avg}(I_B + \Delta I_{B1})$ and $P_{avg}(I_B + \Delta I_{B2})$ of three points. Because the calibration is based on assumption about a linear relationship between an MDL output power and a bias current (this relationship is generally true when the laser works above a threshold and below a maximum current), when the modulation current is less than the threshold for the laser, the laser cannot work. When a working rate is 10 Gbps or above, to avoid a switch delay problem, the modulation current generally cannot be less than the threshold. Therefore, the assumption about the linear relationship is true.

In another embodiment, because the correspondence between the target average power of the first electrical signal and the target alternating current power of the first electrical signal and the target extinction ratio of the first optical signal meets the following relationship:

$$P_{\mathrm{mod}} = K \frac{r_e}{r_e + 1}.$$

In actual application, a drastic variation of the extinction ratio causes a slight variation of the alternating current power of the first electrical signal. Therefore, when the extinction ratio is relatively large, an error is caused when the relationship, shown in the foregoing expression, between the extinction ratio and the alternating current power of the first electrical signal is used. In an ideal case, a linear relationship between a measurement parameter and a control parameter is relatively good. Specifically, the alternating current power of the first electrical signal may be multiplied by $(r_{e,target} + 1)$, where $r_{e,target}$ is the target extinction ratio, and then the following expression may be obtained:

$$\left(r_{e,target} + 1\right).P_{\mathrm{mod}} = K \frac{r_e}{r_e + 1}\left(r_{e,target} + 1\right) \approx K r_e.$$

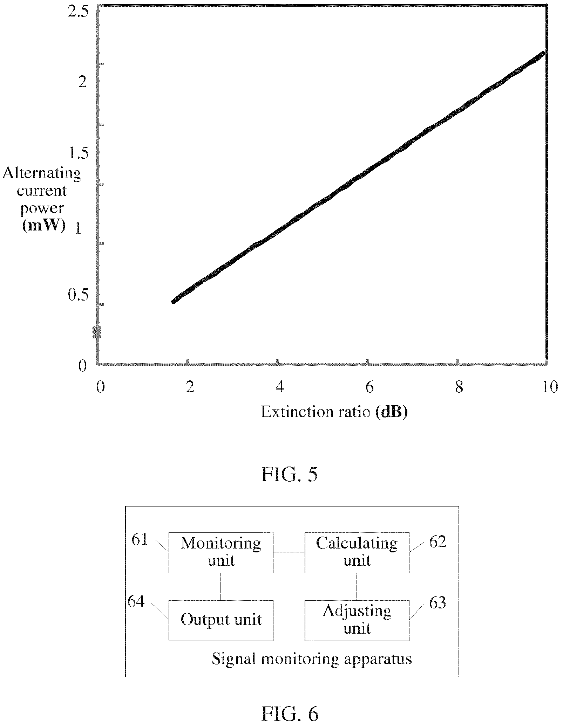

That is, $(r_{e,target} + 1).P_{\mathrm{mod}}$ and the extinction ratio of the first optical signal have a linear relationship, which may be specifically shown in FIG. 5. In this way, in step 203, the adjusting a modulation current of the first electrical signal according to a target alternating current power of the first electrical signal and the alternating current power of the first electrical signal, so that the adjusted modulation current of the first electrical signal is a target modulation current may include:

adjusting the modulation current of the first electrical signal according to the target alternating current power of the first electrical signal and a multiplication alternating current power of the first electrical signal, so that the adjusted modulation current of the first electrical signal is the target modulation current. The multiplication alternating current power is an alternating current power obtained by multiplying the alternating current power of the first electrical signal by $(r_{e,target} + 1)$. The multiplication alternating current power and the extinction ratio have a linear relationship, and therefore, the extinction ratio may be better controlled by using the multiplication alternating current power.

In the foregoing technical solution, on the basis of the foregoing embodiment, multiple optional implementation manners are implemented, in all of which precise control on an extinction ratio can be implemented.

The following are apparatus embodiments of the present invention, and the apparatus embodiments of the present invention are used to execute the methods implemented in Method Embodiments 1 and 2 of the present invention. For ease of description, only parts related to the embodiments of the present invention are shown. For specific technical details that are not disclosed, reference is made to Embodiment 1 and Embodiment 2 of the present invention.

FIG. 6 is a schematic structural diagram of a signal monitoring apparatus according to an embodiment of the present invention. As shown in FIG. 6, the apparatus includes: a photodiode 61, a monitoring unit 62, an adjusting unit 63, and an output unit 64.

The photodiode 61 is configured to receive a first optical signal, perform optical-to-electrical conversion on the first optical signal, and output a converted first electrical signal.

Specifically, the photodiode 61 may convert the first electrical signal into an electrical signal, so as to obtain the first electrical signal.

The monitoring unit 62 is configured to monitor the first electrical signal, and acquire a monitored power of the first electrical signal.

Specifically, an average power and an alternating current power of the first electrical signal may be calculated, where the first optical signal may be specifically an optical signal that is obtained by performing optical-to-electrical conversion on the first electrical signal.

The adjusting unit 63 is configured to adjust the monitored power of the first electrical signal according to a target monitored power of the first electrical signal, and output a second electrical signal, so that a monitored power of the second electrical signal is the target monitored power.

That is, the first electrical signal is adjusted to obtain the second electrical signal, and specifically, a current or a voltage of the first electrical signal may be adjusted.

The output unit 64 is configured to perform optical-to-electrical conversion on the second electrical signal according to a correspondence between the target monitored power of the first electrical signal and a target extinction ratio of the first optical signal, and output a converted second optical signal, where the second optical signal is an optical signal that has a target extinction ratio.

The correspondence exists between the target monitored power of the first electrical signal and the target extinction ratio of the first optical signal, and therefore, when the monitored power of the second electrical signal is the target monitored power, an extinction ratio of the second optical signal obtained after the conversion from the second electrical signal is the target extinction ratio. That is, according to the correspondence between the target monitored power of the first electrical signal and the target extinction ratio of the first optical signal, the extinction ratio of the second optical signal can be determined by using the monitored power of the second electrical signal, and conversely, the monitored power of a monitored signal of the second electrical signal can be determined by using the extinction ratio of the second optical signal.

The extinction ratio may be specifically a ratio of a power generated by the first electrical signal when a pulse level for controlling emitting of an optical signal is a high level (for example, "1") to a power generated by the first electrical signal when the pulse level is a low level (for example, "0").

The apparatus may be applied to any device, for example, a laser that can send an optical signal.

In the foregoing technical solution, a first optical signal is received, optical-to-electrical conversion is performed on the first optical signal, and a converted first electrical signal is output; the first electrical signal is monitored, and a monitored power of the first electrical signal is acquired; the monitored power of the first electrical signal is adjusted according to a target monitored power of the first electrical signal, and a second electrical signal is output, so that a monitored power of the second electrical signal is the target monitored power; and optical-to-electrical conversion is performed on the second electrical signal according to a correspondence between the target monitored power of the first electrical signal and a target extinction ratio of the first optical signal, and a converted second optical signal is output, where the second optical signal is an optical signal that has a target extinction ratio. In this way, precise control on an extinction ratio of an optical signal can be implemented on the basis of precise control on a monitored power.

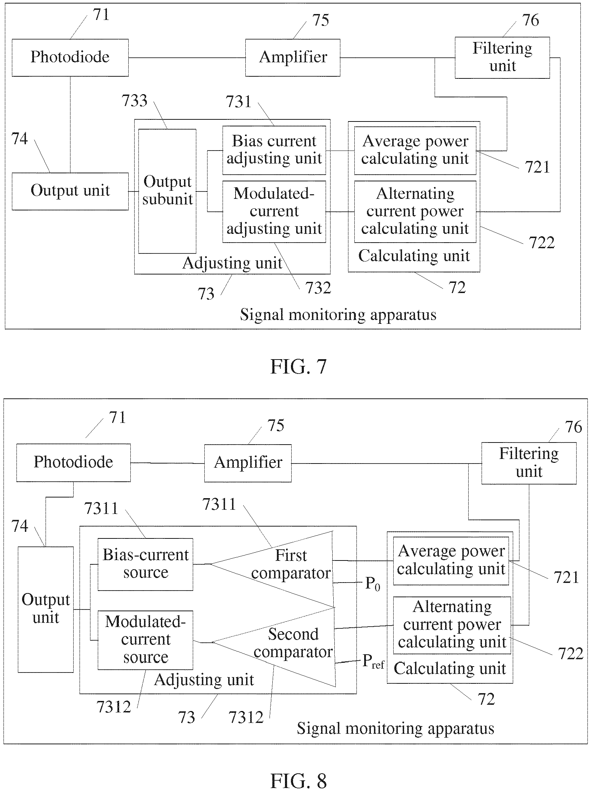

FIG. 7 is a schematic structural diagram of another signal monitoring apparatus according to an embodiment of the present invention. As shown in FIG. 7, the apparatus includes: a photodiode 71, a monitoring unit 73, an adjusting unit 73, and an output unit 74, where the monitoring unit 72 includes an average power monitoring unit 721 and an alternating current power monitoring unit 722, and the adjusting unit 73 includes a bias current adjusting unit 731, a modulation current adjusting unit 732, and an output subunit 733.

The photodiode 71 is configured to receive a first optical signal, perform optical-to-electrical conversion on the first optical signal, and output a converted first electrical signal.

The apparatus may further include an amplifier 75, where an input end of the amplifier 75 is connected to an output end of the photodiode 71, an output end of the amplifier 75 is connected to an input end of the monitoring unit 72, and the amplifier 75 is configured to amplify the electrical signal, and perform power monitoring on the amplified electrical signal. That is, the monitoring unit 72 may perform power monitoring on the amplified first electrical signal. The amplifier 75 may be specifically a TIA, and the photodiode 71 may be specifically an MPD.

The average power monitoring unit 721 is configured to acquire an average power of the first electrical signal, where an input end of the average power monitoring unit 721 may be specifically connected to the output end of the photodiode 71, or an input end of the average power monitoring unit 721 may be specifically connected to the output end of the amplifier 75.

The alternating current power monitoring unit 722 is configured to acquire an alternating current power of the first electrical signal, where an input end of the alternating current power monitoring unit 72 may be specifically connected to the output end of the photodiode 71, or an input end of the alternating current power monitoring unit 722 may be specifically connected to the output end of the amplifier 74.

Optionally, the apparatus may further include a filtering unit 76, where:

the filtering unit 76 is configured to perform filtering on the first electrical signal, where an input end of the filtering unit 76 is connected to the output end of the photodiode 71, or an input end of the filtering unit 76 is connected to the output end of the amplifier 75, an output end of the filtering unit 76 is connected to the input end of the alternating current power monitoring unit 722, and the alternating current power monitoring unit 722 may be specifically configured to acquire the alternating current power of the first electrical signal that undergoes filtering.

The filtering unit 76 may be specifically a BPF or a high-pass filter, or filter a monitored signal by using a coupling capacitor, that is, block a direct current power of the monitored signal to obtain alternating current power of the monitored signal.

An input end of the bias current adjusting unit 731 is connected to an output end of the average power monitoring unit 721, and the bias current adjusting unit 731 is configured to adjust a bias current of the first electrical signal according to a target average power of the first electrical signal and the average power of the first electrical signal, so that the adjusted bias current of the first electrical signal is a target bias current;
an input end of the modulation current adjusting unit 732 is connected to an output end of the alternating current power monitoring unit 722, and the modulation current adjusting unit 732 is configured to adjust a modulation current of the first electrical signal according to a target alternating current power of the first electrical signal and the alternating current power of the first electrical signal, so that the adjusted modulation current of the first electrical signal is a target modulation current; and
the output subunit 733 is configured to output a second electrical signal according to the target bias current and the target modulation current of the first electrical signal, where a bias current of the second signal is the target bias current, and a modulation current of the second signal is the target modulation current.

Specifically, a correspondence may exist between the target average power and the target bias current, and in this way, the average power of the first electrical signal may be adjusted to the target average power according to the target average power of the first electrical signal. From the one-to-one correspondence between the target average power and the target bias current of the first electrical signal, it can be known that, when the average power of the first electrical signal is adjusted to the target average power, the bias current that is output by the first electrical signal is the target bias current. A correspondence exists between the target alternating current power and the target modulation current, and in this way, the alternating current power of the first electrical signal may be adjusted to the target alternating current power according to the target alternating current power of the first electrical signal. From the one-to-one correspondence between the target alternating current power and the target modulation current of the first electrical signal, it can be known that, when the alternating current power of the first electrical signal is adjusted to the target alternating current power, the modulation current that is output by the first electrical signal is the target modulation current.

The output unit 74 is configured to perform optical-to-electrical conversion on the second electrical signal according to a correspondence between the target average power of the first electrical signal and the target alternating current power of the first electrical signal and a target extinction ratio of the first optical signal, and output a converted second optical signal, where the second optical signal is an optical signal that has a target extinction ratio.

In another embodiment, a correspondence between the target monitored power of the first electrical signal and the target extinction ratio of the first optical signal is associated with a slope efficiency of the first optical signal. That is, for a different slope efficiency, the correspondence between the target monitored power of the first electrical signal and the target extinction ratio of the first optical signal is different.

As an optional implementation manner, as shown in FIG. 8, the output subunit 731 includes a bias current source 7311 and a modulation current source 7312, where:

the bias current source 7311 is configured to output the target bias current, and may specifically receive an adjustment from the bias current adjusting unit 731, and output the target bias current; and
the modulation current source 7312 is configured to output the target modulation current, and may specifically receive an adjustment from the modulation current adjusting unit 732, and output the target modulation current.

The second electrical signal may specifically include the target bias current and the target bias current. That is, the second electrical signal may specifically include the target bias current that is output by the bias current source 7311 and the target modulation current that is output by the modulation current source 7312.

As an optional implementation manner, the bias current adjusting unit 731 may be specifically a first comparator 7311, where a first input end of the first comparator 7311 is connected to the output end of the average power monitoring unit 721, a second input end of the first comparator 7311 is connected to a first reference value $P_0$ used for denoting the target average power of the first electrical signal, an output end of the first comparator 7311 is connected to the bias current source 7311, and the first comparator 7311 is configured to adjust, according to the target average power of the first electrical signal and the average power of the first electrical signal, a current that is output by the bias current source 7311, so that the current that is output by the bias current source 7311 is the target bias current.

For the first reference value, reference may be made to the first reference value described in the foregoing method embodiments.

As an optional implementation manner, the modulation current adjusting unit 732 may be specifically a second comparator 7321, a first input end of the second comparator 7321 is connected to the output end of the alternating current power monitoring unit 722, a second input end of the second comparator 7321 is connected to a second reference value $P_{ref}$ used for denoting the target alternating current power of the first electrical signal, an output end of the second comparator 7321 is connected to the modulation current source 7312, and the second comparator 7321 is configured to adjust, according to the target average power of the first electrical signal and the average power of the first electrical signal, a current that is output by the modulation current source 7312, so that the current that is output by the modulation current source 7312 is the target modulation current.

For the second reference value, reference may be made to the second reference value described in the foregoing method embodiments.

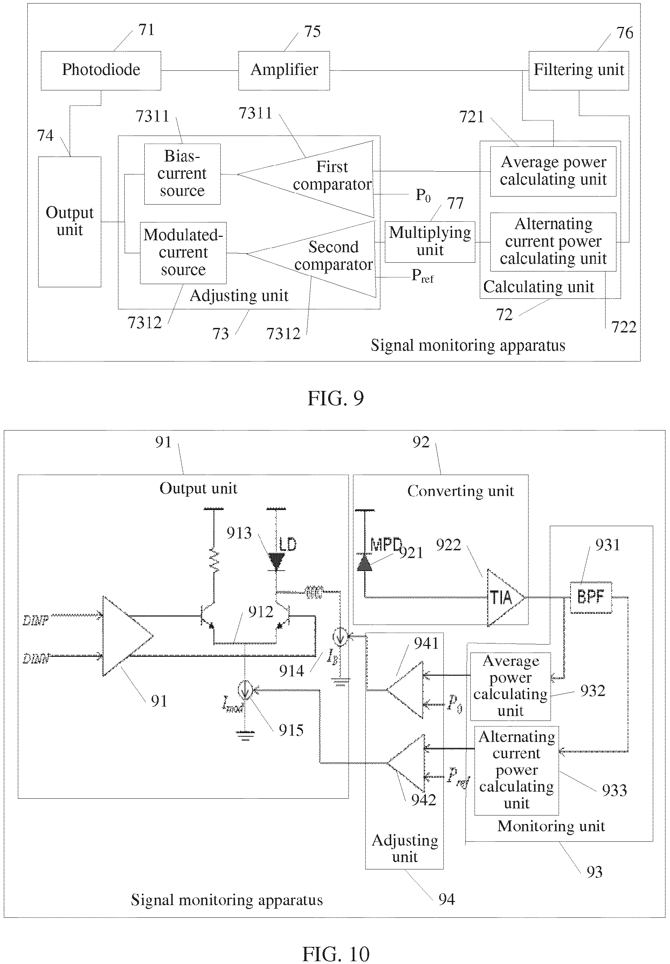

As an optional manner, as shown in FIG. 9, the circuit may further include a multiplying unit 77, where:

an input end of the multiplying unit 77 is connected to the output end of the alternating current power monitoring unit 722, an output end of the multiplying unit 76 is connected to the first input end of the second comparator 7321, and the multiplying unit 77 is configured to multiply the alternating current power, output by the output end of the alternating current power monitoring unit, of the first electrical signal by a target function, to obtain a multiplied alternating current power.

For example, the correspondence between the target average power of the first electrical signal and the target alternating current power of the first electrical signal and the target extinction ratio of the first optical signal meets the following relationship:

$$P_{\mathrm{mod}} = K \frac{r_e}{r_e + 1}.$$

For details about the relational expression, reference may be made to the relationship of the correspondence, described in the foregoing method embodiments, between the target average power of the first electrical signal and the target alternating current power of the first electrical signal and the target extinction ratio of the first optical signal, which is, and no repeated description is provided herein.

In actual application, a drastic variation of the extinction ratio causes a slight variation of the alternating current power of the first electrical signal. Therefore, when the extinction ratio is relatively large, an error is caused when the relationship, shown in the foregoing expression, between the extinction ratio and the alternating current power of the first electrical signal is used. In an ideal case, a linear relationship between a measurement parameter and a control parameter is relatively good. Specifically, the alternating current power of the first electrical signal may be multiplied by $(r_{e,target} + 1)$, that is, the multiplying unit 77 is specifically configured to multiply the alternating current power, output by the output end of the alternating current power monitoring unit, of the first electrical signal by the target function $(r_{e,target} + 1)$, to obtain a multiplied alternating current power $(r_{e,target} + 1).P_{\mathrm{mod}}$, where

$$\left( r_{e,target} + 1 \right).P_{\mathrm{mod}} = K \frac{r_e}{r_e + 1} \left( r_{e,target} + 1 \right) \approx K r_e.$$

That is, $(r_{e,target} + 1).P_{\mathrm{mod}}$ and the extinction ratio have a linear relationship, which may be specifically shown in FIG. 5. In this way, the second comparator 7321 may adjust the modulation current of the first electrical signal according to the target alternating current power of the first electrical signal and the multiplied alternating current power of the first electrical signal, so that the adjusted modulation current of the first electrical signal is the target modulation current.

In the foregoing technical solution, on the basis of the foregoing embodiment, multiple optional implementation manners are implemented, in all of which precise control on an extinction ratio can be implemented.

FIG. 10 is a schematic structural diagram of a signal monitoring apparatus according to an embodiment of the present invention. As shown in FIG. 10, the apparatus includes: an output unit 91, a conversion unit 92, a monitoring unit 93, and an adjusting unit 94.

The output unit 91 includes: a drive circuit 911, a switch unit 912, a laser (Laser Diode, LD) 913, a bias current source $I_B$ 914, and a modulation current source $I_{mod}$ 915.

An input end of the drive circuit 911 is connected to power signals DINP and DINN, an output end of the drive circuit 91 is connected to an input end of the switch circuit 912, and the drive circuit 911 is configured to transmit a data signal to the switch circuit 912. The switch circuit 912 is configured to work in a closed state when an output data signal is at a high level (for example, "1"), a current that is output by the modulation current source 915 is loaded to the laser 913, and the laser 913 sends a first optical signal; in this case, a power of the first optical signal is $P_1$ ($P_1$ described in the foregoing embodiment). The switch circuit 912 is configured to work in an open state when an output data signal is at a low level (for example, "0"), a current that is output by the bias current source 914 is loaded to the laser 913, and the laser 913 sends a first optical signal; in this case, a power of the first optical signal is $P_0$ ($P_0$ described in the foregoing embodiment). The bias current source 914 is a variable current source, and the modulation current source 915 is a variable current source.

The conversion unit 92 includes an MPD 921 and a TIA 922, where:

a negative electrode of the MPD 921 is grounded, a positive electrode of the MPD 921 is connected to an input end of the TIA 922, and the MPD 921 is configured to convert an optical signal sent by the laser 913 into a current signal; and the TIA 922 converts the current signal, obtained by the MPD 921 through conversion, into a voltage signal, thereby obtaining a first electrical signal.

The monitoring unit 93 includes a filtering circuit 931, an average power monitoring unit 932, and an alternating current power monitoring unit 933, where:

an input end of the average power monitoring unit 932 is connected to an output end of the TIA 922, and the average power monitoring unit 932 is configured to calculate an average power of the first electrical signal that is output by the output end of the TIA 922; an input end of the filtering circuit 931 is connected to the output end of the TIA 922, an input end of the alternating current power monitoring unit 933 is connected to an output end of the filtering circuit 931, and the alternating current power monitoring unit 933 is configured to calculate an alternating current power of the first electrical signal that is output by the output end of the TIA 922.

The filtering circuit 931 may be specifically a BPF, a high-pass filter, a coupling capacitor, or the like.

The adjusting unit 94 includes a first comparator 941 and a second comparator 942.

A first input end of the first comparator 941 is connected to an output end of the average power monitoring unit 932, the first input end of the first comparator 941 is connected to a first reference value $P_0$ used for denoting a target average power that is corresponding to a target extinction ratio and that is indicated by a correspondence between the target average power of the first electrical signal and a target alternating current power of the first electrical signal and the target extinction ratio of the first optical signal, an output end of the first comparator 941 is connected to an adjustment end of the bias current source 914, and the first comparator 941 is configured to adjust an output current of the bias current source 914 to a target bias current, so that the average power calculated by the average power monitoring unit 932 is equal to the first reference value $P_0$.

A first input end of the second comparator 942 is connected to an output end of the alternating current power monitoring unit 933, the first input end of the second comparator 942 is connected to a second reference value $P_{rof}$ used for denoting the target alternating current power that is corresponding to the target extinction ratio and that is indicated by the correspondence between the target average power of the first electrical signal and the target alternating current power of the first electrical signal and the target extinction ratio of the first optical signal, an output end of the second comparator 942 is connected to an adjustment end of the modulation current source 915, and the second comparator 942 is configured to adjust an output current of the modulation current source 915 to a target modulation current, so that the alternating current power calculated by the alternating current power monitoring unit 933 is equal to the second reference value $P_{rof}$.

Because the bias current source 914 and the modulation current source 915 respectively output the target bias current source and the target modulation current, when the output unit 91 outputs a second electrical signal to the LD 913, and the LD 913 converts the second electrical signal into a second optical signal, an extinction ratio of the second optical signal is the target extinction ratio.

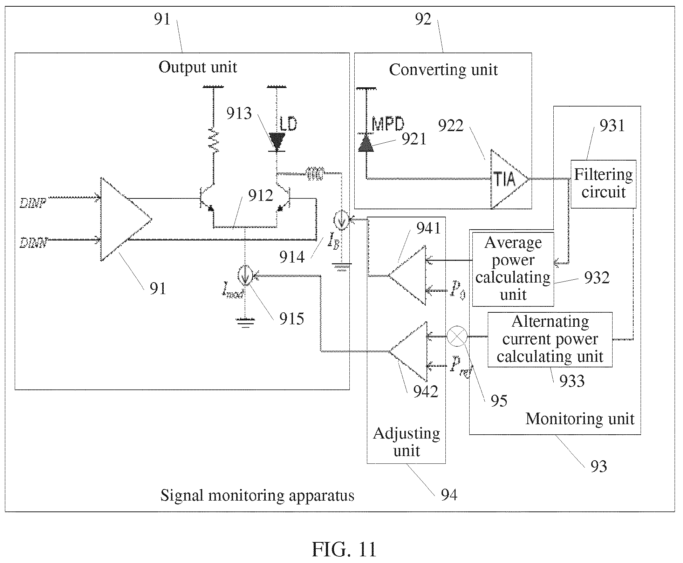

As an optional implementation manner, as shown in FIG. 11, the circuit may further include: a multiplying unit 95, where:

an input end of the multiplying unit 95 is connected to the output end of the alternating current power monitoring unit 933, an output end of the multiplying unit 95 is connected to the first input end of the second comparator 942, the multiplying unit 95 is configured to multiply the alternating current power, output by the alternating current power monitoring unit 933, of the first electrical signal by a target function, to obtain a multiplied alternating current power, where the multiplied alternating current power and the extinction ratio of the first optical signal have a linear relationship.

For example, the correspondence between the target average power of the first electrical signal and the target alternating current power of the first electrical signal and the target extinction ratio of the first optical signal meets the following relationship:

$$P_{\mathrm{mod}} = K \frac{r_e}{r_e + 1}.$$

For details about the relational expression, reference may be made to the relationship of the correspondence described in the foregoing method embodiments, and no repeated description is provided herein.

In actual application, a drastic variation of the extinction ratio causes a slight variation of the alternating current power of the first electrical signal. Therefore, when the extinction ratio is relatively large, an error is caused when the relationship, shown in the foregoing expression, between the extinction ratio and the alternating current power of the first electrical signal is used. In an ideal case, a linear relationship between a measurement parameter and a control parameter is relatively good. Specifically, the alternating current power of the first electrical signal may be multiplied by ($r_{e,target}$ + 1), that is, the multiplying unit 77 is specifically configured to multiply the alternating current power, which is output by the output end of the alternating current power monitoring unit, of the first electrical signal by the target function ($r_{e,target}$ + 1), to obtain a multiplied alternating current power ($r_{e,target}$ + 1).$P_{\mathrm{mod}}$, where

$$\left(r_{e,target} + 1\right).P_{\mathrm{mod}} = K \frac{r_e}{r_e + 1}\left(r_{e,target} + 1\right) \approx K r_e.$$

That is, ($r_{e,target}$ +1).$P_{\mathrm{mod}}$ and the extinction ratio have a linear relationship, which may be specifically shown in FIG. 5. In this way, the second comparator 942 may adjust the modulation current of the first electrical signal according to the target alternating current power of the first electrical signal and the multiplied alternating current power of the first electrical signal, so that the adjusted modulation current of the first electrical signal is the target modulation current.

In the foregoing technical solution, on the basis of the foregoing embodiment, multiple optional implementation manners are implemented, in all of which precise control on an extinction ratio can be implemented.

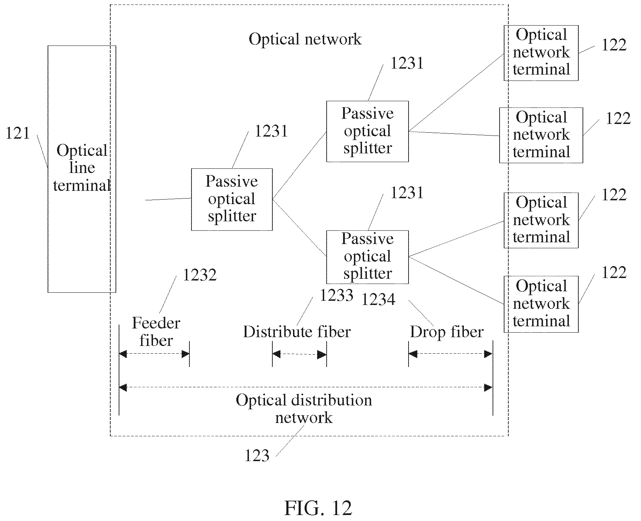

FIG. 12 is a schematic structural diagram of an optical network system according to an embodiment of the present invention. As shown in FIG. 12, the optical network system includes: an optical line terminal (Optical Line Termination, OLT) 121 and an optical network unit (Optical Network Unit, ONU) 122 or an optical network terminal (Optical Network Termination, ONT) 122, where the optical line terminal 121 is connected to the ONU 122 by using an optical distribution network (Optical Distribution Network, ODN) 123, or the optical line terminal 121 is connected to the ONT 122 by using an ODN 123.

The OLT 121 provides a network side interface for the optical network system, and is connected to one or more ODNs 123. The ODN 123 is a passive optical splitter, splits downlink data of the OLT 121 and transmits the downlink data to each ONU 122, and collects uplink data of multiple ONUs 122/ONTs 122 and transmits the uplink data to the OLT 121. The ONU 122 provides a user side interface for the optical network system, and is connected in uplink to the ODN 123. If the ONU 122 directly provides a user port function, for example, an Ethernet user port used by a personal computer (Personal Computer, PC) to connect to the Internet, the ONU 122 is referred to as the ONT 122; and the ONU 122 mentioned in the following refers to both the ONU 122 and the ONT 122.

The ODN 123 generally includes three parts: a passive optical splitter (Splitter) 1231, a feeder fiber (Feed Fiber) 1232, a distribution fiber (Distribute Fiber) 1233 and a drop fiber (Drop Fiber) 1234, where the distribution fiber 1233 and the drop fiber 1234 may be collectively referred to as a distribution fiber. FIG. 12 is a structural diagram of the ODN 123 that has two levels of optical splitting, and an ODN 123 that has only one level of optical splitting has only a feeder fiber and a drop fiber.

A link from the OLT 121 to the ONU 122 is referred to as a downlink, and a link from the ONU 122 to the OLT 121 is referred to as an uplink. Due to a characteristic of light, downlink data is broadcast to various ONUs 122; and for sending of uplink data of the ONUs 122, the OLT 121 allocates sending intervals, and the sending is performed in a time-division multiplexing manner.

A wavelength of 1310 nm may be used in the uplink of the optical network system, and a wavelength of 1490 nm may be used in the downlink. Light in the uplink and downlink may be transmitted through a same optical fiber, and different optical fibers may also be used for transmission in the uplink and downlink.

The OLT 121 may be the signal monitoring apparatus in any implementation manner in the embodiments shown in FIG. 6 to FIG. 11.

The ONU 122 may also be the signal monitoring apparatus in any implementation manner in the embodiments shown in FIG. 6 to FIG. 11.

In the foregoing technical solution, precise control on an extinction ratio of an optical signal can be implemented on the basis of precise control on a monitored power.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. An optical signal monitoring and control method, comprising:

   receiving a first optical signal, performing optical-to-electrical conversion on the first optical signal, and outputting a converted first electrical signal;
   monitoring the first electrical signal, and acquiring a monitored power of the first electrical signal;
   adjusting the monitored power of the first electrical signal according to a target monitored power of the first electrical signal, and outputting a second electrical signal, so that a monitored power of the second electrical signal is the target monitored power; and
   performing optical-to-electrical conversion on the second electrical signal according to a correspondence between the target monitored power of the first electrical signal and a target extinction ratio of the first optical signal, and outputting a converted second optical signal, wherein the second optical signal is an optical signal that has a target extinction ratio.

2. The method according to claim 1, wherein before the acquiring a monitored power of the first electrical signal, the method comprises:

   amplifying the first electrical signal, and performing power monitoring on the amplified first electrical signal.

3. The method according to claim 1 or 2, wherein the acquiring a monitored power of the first electrical signal comprises:

   acquiring an average power of the first electrical signal and an alternating current power of the first electrical signal.

4. The method according to claim 3, wherein the target monitored power of the first electrical signal comprises a target average power of the first electrical signal and a target alternating current power of the first electrical signal.

5. The method according to claim 4, wherein the adjusting the monitored power of the first electrical signal according to a target monitored power of the first electrical signal, and outputting a second electrical signal comprises:

   adjusting a bias current of the first electrical signal according to the target average power of the first electrical signal and the average power of the first electrical signal, so that the adjusted bias current of the first electrical signal is a target bias current; adjusting a modulation current of the first electrical signal according to the target alternating current power of the first electrical signal and the alternating current power of the first electrical signal, so that the adjusted modulation current of the first electrical signal is a target modulation current; and outputting the second electrical signal according to the target bias current and the target modulation current of the first electrical signal, wherein a bias current of the second signal is the target bias current, and a modulation current of the second signal is the target modulation current.

6. The method according to any one of claims 1 to 5, wherein the correspondence between the target monitored power of the first electrical signal and the target extinction ratio of the first optical signal is associated with a slope efficiency of the first optical signal.

7. A signal monitoring apparatus, comprising: a photodiode, a monitoring unit, an adjusting unit and an output unit, wherein:

the photodiode is configured to receive a first optical signal, perform optical-to-electrical conversion on the first optical signal, and output a converted first electrical signal;
the monitoring unit is configured to monitor the first electrical signal, and acquire a monitored power of the first electrical signal;
the adjusting unit is configured to adjust the monitored power of the first electrical signal according to a target monitored power of the first electrical signal, and output a second electrical signal, so that a monitored power of the second electrical signal is the target monitored power; and
the output unit is configured to perform optical-to-electrical conversion on the second electrical signal according to a correspondence between the target monitored power of the first electrical signal and a target extinction ratio of the first optical signal, and output a converted second optical signal, wherein the second optical signal is an optical signal that has the target extinction ratio.

8. The apparatus according to claim 7, wherein the apparatus further comprises an amplifier, wherein:

an input end of the amplifier is connected to an output end of the photodiode, an output end of the amplifier is connected to an input end of the monitoring unit, and the amplifier is configured to amplify the electrical signal, and perform power monitoring on the amplified electrical signal.

9. The apparatus according to claim 7 or 8, wherein the monitoring unit comprises an average power monitoring unit and an alternating current power monitoring unit, wherein:

the average power monitoring unit is configured to acquire an average power of the first electrical signal; and
the alternating current power monitoring unit is configured to acquire an alternating current power of the first electrical signal.

10. The apparatus according to claim 9, wherein the target monitored power of the first electrical signal comprises a target average power of the first electrical signal and a target alternating current power of the first electrical signal.

11. The apparatus according to claim 10, wherein the adjusting unit comprises a bias current adjusting unit and a modulation current adjusting unit, wherein:

an input end of the bias current adjusting unit is connected to an output end of the average power monitoring unit, and the bias current adjusting unit is configured to adjust a bias current of the first electrical signal according to the target average power of the first electrical signal and the average power of the first electrical signal, so that the adjusted bias current of the first electrical signal is a target bias current;
an input end of the modulation current adjusting unit is connected to an output end of the alternating current power monitoring unit, and the modulation current adjusting unit is configured to adjust a modulation current of the first electrical signal according to the target alternating current power of the first electrical signal and the alternating current power of the first electrical signal, so that the adjusted modulation current of the first electrical signal is a target modulation current; and
an output subunit is configured to output the second electrical signal according to the target bias current and the target modulation current of the first electrical signal, wherein a bias current of the second signal is the target bias current, and a modulation current of the second signal is the target modulation current.

12. The apparatus according to claim 11, wherein the output subunit comprises a bias current source and a modulation current source, wherein:

the bias current source is configured to output the target bias current; and
the modulation current source is configured to output the target modulation current.

13. The apparatus according to claim 12, wherein the bias current adjusting unit comprises a first comparator, wherein a first input end of the first comparator is connected to the output end of the average power monitoring unit, a second input end of the first comparator is connected to a first reference value used for denoting the target average power of the first electrical signal, an output end of the first comparator is connected to the bias current source, and the first comparator is configured to adjust, according to the target average power of the first electrical signal and the average power of the first electrical signal, a current that is output by the bias current source, so that the current that is output by the bias current source is the target bias current.

14. The apparatus according to claim 12 or 13, wherein the modulation current adjusting unit comprises a second comparator, a first input end of the second comparator is connected to the output end of the alternating current power monitoring unit, a second input end of the second comparator is connected to a second reference value used for denoting the target alternating current power of the first electrical signal, an output end of the second comparator is connected to the modulation current source, and the second comparator is configured to adjust, according to the target average power of the first electrical signal and the average power of the first electrical signal, a current that is output by the modulation current source, so that the current that is output by the modulation current source is the target modulation current.

15. An optical network system, wherein the optical network system comprises an optical line terminal and an optical network unit, and the optical line terminal is connected to the optical network unit by using an optical distribution network, wherein the optical line terminal comprises the signal monitoring apparatus according to any one of claims 7 to 14; and/or
the optical network unit comprises the signal monitoring apparatus according to any one of claims 7 to 14.

Receive a first optical signal, perform optical-to-electrical conversion on the first optical signal, and output a converted first electrical signal

101

Monitor the first electrical signal, and acquire a monitored power of the first electrical signal

102

Adjust the monitored power of the first electrical signal according to a target monitored power of the first electrical signal, and output a second electrical signal, so that a monitored power of the second electrical signal is the target monitored power

103

Perform optical-to-electrical conversion on the second electrical signal according to a correspondence between the target monitored power of the first electrical signal and a target extinction ratio of the first optical signal, and output a converted second optical signal, where the second optical signal is an optical signal that has the target extinction ratio

104

FIG. 1

| Receive a first optical signal, perform optical-to-electrical conversion on the first optical signal, and output a converted first electrical signal | 201 |

| Monitor the first electrical signal, and acquire an average power of the first electrical signal and an alternating current power of the first electrical signal | 202 |

| Adjust a bias current of the first electrical signal according to a target average power of the first electrical signal and the average power of the first electrical signal, so that the adjusted bias current of the first electrical signal is a target bias current, and adjust a modulated current of the first electrical signal according to a target alternating current power of the first electrical signal and the alternating current power of the first electrical signal, so that the adjusted modulated current of the first electrical signal is a target modulated current | 203 |

| Output a second electrical signal according to the target bias current and the target modulated current of the first electrical signal, where a bias current of the second signal is the target bias current, and a modulated current of the second signal is the target modulated current | 204 |

| Perform optical-to-electrical conversion on the second electrical signal according to a correspondence between the target average power of the first electrical signal, the target alternating current power of the first electrical signal, and a target extinction ratio of the first optical signal, and output a converted second optical signal, where the second optical signal is an optical signal that has the target extinction ratio | 205 |

FIG. 2

FIG. 3

FIG. 4

FIG. 5

Signal monitoring apparatus

FIG. 6

FIG. 7

FIG. 8

FIG. 9

FIG. 10

FIG. 11

Optical network

121 — Optical line terminal

1231 — Passive optical splitter

1231 — Passive optical splitter

1231 — Passive optical splitter

Optical network terminal — 122

Optical network terminal — 122

Optical network terminal — 122

Optical network terminal — 122

1232 — Feeder fiber

1233 — Distribute fiber

1234 — Drop fiber

Optical distribution network

123

FIG. 12

# INTERNATIONAL SEARCH REPORT

| International application No. |
| --- |
| PCT/CN2013/078502 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04B 10/-; H04Q 11/-; G01M 11/-

Documentation searched other than minimum documentation to the extent that such documents are included in the fields searched

Electronic data base consulted during the international search (name of data base and, where practicable, search terms used)

WPI; EPODOC; CNPAT; CNKI; VEN: HUAWEI, CHENG Ning, ZHONG Degang, LIAO Zhenxing, optical, electric+, signal, transmission, extinction, ratio, bias, current, power, detect, sensor, first, second, net, Photoelectric 2d conversion, average, AC, radio frequency, extinction ratio, monitor, slope+

### C. DOCUMENTS CONSIDERED TO BE RELEVANT

| Category* | Citation of document, with indication, where appropriate, of the relevant passages | Relevant to claim No. |
| --- | --- | --- |
| X | CN 1669250 A (MATSUSHITA ELECTRIC IND CO., LTD.) 14 September 2005 (14.09.2005) description, page 5, line 5 to page 8, paragraph [0011], and figures 1 to 4 | 1, 3-7 |
| Y | | 2, 8-15 |
| Y | CN 102045599 A (HUAWEI TECHNOLOGIES CO., LTD.) 04 May 2011 (04.05.2011) description , paragraphs [0026] to [0093], and figures 1 to 5 | 15 |
| Y | CN 101124468 A (IBM [US]) 13 February 2008 (13.02.2008) description, page 4, the third paragraph from the bottom to page 10, the last paragraph, figures 1 to 5 | 2, 8-14 |
| A | JP 2006-80262 A (HITACHI KOKUSAI ELECTRIC INC.) 23 March 2006 (23.03.2006) the whole document | 1-15 |
| A | US 2003/0112487 A1 (FULLER, Richard Clair et al.) 19 June 2003 (19.06.2003) the whole document | 1-15 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 March 2014 (20.03.2014) | 03 April 2014 (03.04.2014) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHONG, Jie Telephone No. (86-10) 82245109 |
| --- | --- |

Form PCT/ISA /210 (second sheet) (July 2009)

## INTERNATIONAL SEARCH REPORT
### Information on patent family members

| International application No. |
| --- |
| PCT/CN2013/078502 |

| Patent Documents referred in the Report | Publication Date | Patent Family | Publication Date |
| --- | --- | --- | --- |
| CN 1669250 A | 14.09.2005 | WO 2004010611 A1 | 29.01.2004 |
| | | JP 2004056830 A | 19.02.2004 |
| | | JP 2004056150 A | 19.02.2004 |
| | | US 2005226292 A1 | 13.10.2005 |
| | | EP 1536577 A1 | 01.06.2005 |
| CN 102045599 A | 04.05.2011 | None | |
| CN 101124468 A | 13.02.2008 | CN 100582716 C | 20.01.2010 |
| | | WO 2006089856 A1 | 31.08.2006 |
| | | US 2006222370 A1 | 05.10.2006 |
| | | US 2009245789 A1 | 01.10.2009 |
| | | US 7885540 B2 | 08.02.2011 |
| | | EP 1861689 A1 | 05.12.2007 |
| | | EP 1861689 B1 | 30.11.2011 |
| | | JP 2008536100 A | 04.09.2008 |
| | | JP 4755656 B2 | 24.08.2011 |
| | | AT 535792 T | 15.12.2011 |
| | | TW 200637199 A | 16.10.2006 |
| | | TW 1358912 B | 21.02.2012 |
| JP 2006080262 A | 23.03.2006 | None | |
| US 2003/0112487 A1 | 19.06.2003 | US 6671079 B2 | 30.12.2003 |

Form PCT/ISA /210 (patent family annex) (July 2009)

## **INTERNATIONAL SEARCH REPORT**

<table>
<tr><td>International application No.</td></tr>
<tr><td>PCT/CN2013/078502</td></tr>
</table>

A: CLASSIFICATION OF SUBJECT MATTER

H04B 10/07 (2013.01) i

H04Q 11/00 (2006.01) i

Form PCT/ISA /210 (extra sheet) (July 2009)